# EUROPEAN PATENT APPLICATION

(11) **EP 4 306 695 A2**
(43) Date of publication of application: **17.01.2024**
(21) Application number: 23180708.2
(22) Date of filing: 21.06.2023
(51) Int. Cl.: D03D 1/00, D03D 15/283, D03D 15/47, D03D 15/573, D03D 15/587, D03J 1/06

(54) **METHOD FOR MANUFACTURING A WOVEN FABRIC FOR COMPOSITE COMPONENTS, LOOM AND COMPOSITE COMPONENT**

(30) Priority: 14.07.2022 GB 202210348
(71) Applicant: Rolls-Royce plc, London N1 9FX (GB)
(72) Inventor: Jones, Christopher, Derby, DE24 8BJ (GB); Buck, Ian, Derby, DE24 8BJ (GB); Dhiman, Sarvesh, Derby, DE24 8BJ (GB)
(74) Representative: Rolls-Royce plc

(57) **Abstract**

A manufacturing method comprises: in a loom (120), weaving a woven reinforcing fibre fabric (200, 300) comprising a plurality of reinforcing fibre tows (112) and polymeric material; and heating the woven reinforcing fibre fabric (200, 300) as it exits the loom (120) to cause the polymeric material to melt and/or cure.

## Description

### FIELD

The present invention concerns manufacturing methods and weaving apparatus for manufacturing woven reinforcing fibre fabrics, as well as preforms and composite components formed from woven reinforcing fibre fabrics.

### BACKGROUND

Fibre reinforced composite materials, such as carbon fibre or glass fibre reinforced polymeric materials, are commonly used to produce aerospace and automotive components, as well as in civil engineering, sporting goods and various other applications.

A fibre reinforced composite material comprises a fibre-based reinforcement and a matrix material. In a fibre reinforced polymeric material, the matrix material is a polymer, typically a thermosetting polymer such as an epoxy resin. The fibre reinforcement may take many different forms and reinforcing fibres may be arranged randomly or in an ordered fashion within the matrix, leading to different material properties.

Of particular interest are woven reinforcing fibre fabrics, in which a plurality of reinforcing fibre tows are woven together to produce 2D or 3D fabric structures. Different weaving patterns can be chosen to tailor mechanical properties of the resultant component. A 2D woven reinforcing fibre fabric has a two-dimensional, single sheet-like structure, with x and y (warp and weft) weaving directions lying "in plane". A 3D woven reinforcing fibre fabric includes multiple *x-y* layers and also reinforcing fibre tows running in a z (binder) weaving direction.

2D woven reinforcing fibre fabrics can be cut and multiple layers laid up to form a laminate having a desired shape and/or thickness.

The presence of z or binder tows provides 3D woven reinforcing fibre fabrics with enhanced mechanical properties in the out of plane direction as compared with 2D woven reinforcing fibre fabrics. The use of 3D woven reinforcing fibre fabrics also enables manufacture of near-net-shape preforms for composite components.

However, there are several drawbacks associated with manufacturing components from reinforcing fibre fabrics. For example, fibre reinforced composite materials can lack toughness. It is also common for air to become trapped in voids within woven structures, making it difficult to achieve final component dimensions within desired manufacturing tolerances and difficult to fill woven preforms completely with matrix material. Shaped woven preforms, dependent on the weave pattern, can also be flexible and easily deformed during handling or transport prior to matrix material infiltration.

Improvements in woven reinforcing fibre fabrics would therefore be desirable.

### SUMMARY

According to a first aspect, there is provided a manufacturing method comprising: in a loom, weaving a woven reinforcing fibre fabric comprising a plurality of reinforcing fibre tows and polymeric material; and heating the woven reinforcing fibre fabric as it exits the loom to cause the polymeric material to melt and/or cure.

It may be that, on melting and/or curing, the polymeric material bonds adjacent reinforcing fibre tows of the woven reinforcing fibre fabric together, thereby stabilising the woven structure of the woven reinforcing fibre fabric. The structure of the woven reinforcing fibre fabric is therefore stabilised as the woven reinforcing fibre fabric exits the loom. The need for subsequent stabilisation steps (for example, in the manufacture of a preform for a composite component) is therefore reduced.

The method may comprise heating the woven reinforcing fibre fabric under tension as the woven reinforcing fibre fabric exits the loom to cause the polymeric material to melt and/or cure.

It may be that, when the woven reinforcing fibre fabric is heated under tension to cause the polymeric material to melt and/or cure, the polymeric material bonds adjacent reinforcing fibre tows of the woven reinforcing fibre fabric together in a compacted woven structure. The structure of the woven reinforcing fibre fabric is therefore compacted and stabilised as the woven reinforcing fibre fabric exits the loom. The need for subsequent compaction and stabilisation steps (for example, in the manufacture of a preform for a composite component) is therefore reduced.

It will be appreciated that a loom is in general a machine used to weave fabric from thread, yarn and/or tows. In the context of the present specification and the appended claims, a loom may be any type of loom suitable for weaving reinforcing fibre tows into woven reinforcing fibre fabrics. For example, the loom may be any suitable type of Dobby loom or Jacquard loom. Suitable looms are available from, for example, Lindauer Dornier GmbH, Germany. Suitable Jacquards (which can be used with looms available from Lindauer Dornier GmbH) are available from, for example, Stäubli International AG, Switzerland.

The polymeric material may be any suitable type of polymeric material which melts and/or cures when heated. For example, the polymeric material may comprise (e.g. predominantly comprise, consist essentially of, or consist of) one or more thermoplastic polymers. It will be appreciated that thermoplastic polymers are polymers which melt, or become pliable or mouldable, at elevated temperatures and which resolidify on cooling. Additionally or alternatively, the polymeric material may comprise (e.g. predominantly comprise, consist essentially of, or consist of) one or more thermosetting polymers and/or precursors therefor. It will be appreciated that thermosetting polymers are polymers which irreversibly harden in a process known as curing and which cannot be melted thereafter. Thermosetting polymers can be formed by curing one or more thermosetting polymer precursors (also known as prepolymers), such as one or more resins. For the purposes of this specification and the appended claims, it will be understood that the term "polymeric material" encompasses thermoplastic polymers, cured thermosetting polymers and precursors (e.g. prepolymers) for thermosetting polymers.

The woven reinforcing fibre fabric may be provided with the polymeric material in any suitable form. For example, polymeric material may be woven into the woven reinforcing fibre fabric with the reinforcing fibre tows. Polymeric material may be woven into the woven reinforcing fibre fabric in addition to the reinforcing fibre tows and/or as part of reinforcing fibre tows. Additionally or alternatively, polymeric material may be applied to the woven reinforcing fibre fabric during and/or after weaving the reinforcing fibre tows together. For example, polymeric material may be applied to the woven reinforcing fibre fabric in the form of a powder or the polymeric material may be sprayed onto the woven reinforcing fibre fabric.

In some examples, the method comprises weaving the plurality of reinforcing fibres tows and a plurality of thermoplastic polymer yarns together in the loom to form the woven reinforcing fibre fabric. The method may comprise heating the woven reinforcing fibre fabric (e.g. under tension) as it exits the loom to cause the plurality of thermoplastic polymer yarns to melt. On melting, the plurality of thermoplastic polymer yarns may bond adjacent reinforcing fibre tows together. When the woven reinforcing fibre fabric is subsequently filled with a polymeric matrix material to form a composite component, the plurality of thermoplastic polymer yarns may also provide the composite component with enhanced toughness. The distribution of thermoplastic polymer throughout the structure can be controlled by the weaving process.

Each thermoplastic polymer yarn comprises thermoplastic polymer. Each thermoplastic polymer yarn may be formed predominantly, for example, entirely, from thermoplastic polymer. For example, each thermoplastic polymer yarn may comprise no less than about 90 wt. %, for example, no less than about 95 wt. %, or no less than about 99 wt. %, for example, about 100 wt. %, thermoplastic polymer.

One or more of (e.g. each of) the thermoplastic polymer yarns may be formed from a single thermoplastic polymer. Alternatively, one or more of (e.g. each of) the thermoplastic polymer yarns may be formed from two or more different thermoplastic polymers. The or each thermoplastic polymer may be a homopolymer or a copolymer. The or each thermoplastic polymer may be an elastomeric thermoplastic polymer.

Each thermoplastic polymer yarn may be formed from the same polymer or polymers. Alternatively, some or all of the thermoplastic polymer yarns may be formed from different polymers.

For example, one or more of (e.g. each of) the thermoplastic polymer yarns may comprise (e.g. consist essentially of, consist of or be formed from) one or more of: polyacrylic acids; acrylonitrile butadiene styrene; polyamides; polylactic acids; polycarbonates; polyether sulfones; polyoxymethylene; polyether ether ketones; polyetherimides; polyolefins (i.e. polyalkenes) such as polyethylene and/or polypropylene; polystyrene; polyvinyl chloride; polyvinylidene fluoride; and/or polytetrafluoroethylene.

One or more of (e.g. each of) the thermoplastic polymer yarns may comprise (e.g. consist essentially of, consist of or be formed from) a polyamide. The polyamide may be an aliphatic polyamide such as nylon 6 or nylon 6,6 (i.e. PA 6 or PA 66). The polyamide may be a polyphthalamide such as PA 6T. The polyamide may be an aromatic polyamide (i.e. an aramid) such as Kevlar^{®}, Nomex^{®}, Twaron^{®}, Technora^{®} or Kermel^{®}.

One or more of (e.g. each of) the thermoplastic polymer yarns may be formed from an aliphatic polyamide such as nylon 6 or nylon 6,6 (i.e. PA 6 or PA 66), for example, available in the Grilon^{®} line produced by EMS-GRIVORY, a division of EMS-CHEMIE AG, Switzerland. A suitable polyamide yarn from the Grilon^{®} line is KE-60.

The woven reinforcing fibre fabric may comprise no less than about 1.0 wt. %, for example, no less than about 1.2 wt. %, or no less than about 1.4 wt. %, or no less than about 1.5 wt. %, or no less than about 2.0 wt. %, or no less than about 3.0 wt. %, or no less than about 3.5 wt. %, thermoplastic polymer yarn. The woven reinforcing fibre fabric may comprise no greater than about 8.0 wt. %, for example, no greater than about 7.5 wt. %, or no greater than about 7.0 wt. %, or no greater than about 6.5 wt. %, or no greater than about 6.0 wt. %, or no greater than about 5.5 wt. %, or no greater than about 5.4 wt. %, or no greater than about 5.2 wt. %, or no greater than about 5.0 wt. %, or no greater than about 4.0 wt. %, thermoplastic polymer yarn. The woven reinforcing fibre fabric may comprise from about 1.0 wt. % to about 8.0 wt. %, for example, from about 1.0 wt. % to about 7.5 wt. %, or from about 1.2 wt. % to about 5.4 wt. %, or from about 1.4 wt. % to about 5.4 wt. %, or from about 1.4 wt. % to about 5.2 wt. %, or from about 1.5 wt. % to about 5.0 wt. %, or from about 2.0 wt. % to about 5.0 wt. %, or from about 1.5 wt. % to about 4.0 wt. %, thermoplastic polymer yarn.

The woven reinforcing fibre fabric may comprise no less than about 1.0 wt. %, for example, no less than about 1.2 wt. %, or no less than about 1.4 wt. %, or no less than about 1.5 wt. %, or no less than about 2.0 wt. %, or no less than about 3.0 wt. %, or no less than about 3.5 wt. %, aliphatic polyamide such as nylon 6 or nylon 6,6 (i.e. PA 6 or PA 66), for example, available in the Grilon^{®} line produced by EMS-GRIVORY, a division of EMS-CHEMIE AG, Switzerland. The woven reinforcing fibre fabric may comprise no greater than about 8.0 wt. %, for example, no greater than about 7.5 wt. %, or no greater than about 7.0 wt. %, or no greater than about 6.5 wt. %, or no greater than about 6.0 wt. %, or no greater than about 5.5 wt. %, or no greater than about 5.4 wt. %, or no greater than about 5.2 wt. %, or no greater than about 5.0 wt. %, or no greater than about 4.0 wt. %, aliphatic polyamide such as nylon 6 or nylon 6,6 (i.e. PA 6 or PA 66), for example, available in the Grilon^{®} line produced by EMS-GRIVORY, a division of EMS-CHEMIE AG, Switzerland. The woven reinforcing fibre fabric may comprise from about 1.0 wt. % to about 8.0 wt. %, for example, from about 1.0 wt. % to about 7.5 wt. %, or from about 1.2 wt. % to about 5.4 wt. %, or from about 1.4 wt. % to about 5.4 wt. %, or from about 1.4 wt. % to about 5.2 wt. %, or from about 1.5 wt. % to about 5.0 wt. %, or from about 2.0 wt. % to about 5.0 wt. %, or from about 1.5 wt. % to about 4.0 wt. %, aliphatic polyamide such as nylon 6 or nylon 6,6 (i.e. PA 6 or PA 66), for example, available in the Grilon^{®} line produced by EMS-GRIVORY, a division of EMS-CHEMIE AG, Switzerland.

One or more of (e.g. each of) the thermoplastic polymer yarns may have a (i.e. direct) linear density no less than about 100 dtex, for example, no less than about 110 dtex, or no less than about 150 dtex, or no less than about 200 dtex. One or more of (e.g. each of) the thermoplastic polymer yarns may have a (i.e. direct) linear density no greater than about 350 dtex, for example, no greater than about 330 dtex, or no greater than about 300 dtex, or no greater than about 250 dtex. One or more of (e.g. each of) the thermoplastic polymer yarns may have a (i.e. direct) linear density from about 100 dtex to about 350 dtex, for example, from about 110 dtex to about 330 dtex, or from about 150 dtex to about 300 dtex. It will be appreciated that the (i.e. direct) linear density of a yarn is the weight of the yarn per unit length. Linear density is typically measured in units of tex (grams per 1000 metres of yarn) or dtex (grams per 10000 metres of yarn). The (i.e. direct) linear density may be measured according to ISO 1973:2021. The inventors have found that, when the linear density of the thermoplastic polymer yarns is too low (for example, below about 100 dtex, e.g. below about 110 dtex), the yarns tend to break during weaving. The inventors have also found that, when the linear density of the thermoplastic polymer yarns is too high (for example, above about 350 dtex, e.g. above about 330 dtex), the yarns can become difficult to weave and there are minimal further improvements in compaction or stabilisation.

It will be appreciated that a reinforcing fibre tow is a bundle of reinforcing fibres (typically in the form of continuous filaments). The reinforcing fibres in a reinforcing fibre tow are typically untwisted.

The size of a reinforcing fibre tow can be quantified by the number of fibres (i.e. filaments) in the tow. Each of the reinforcing fibre tows may contain no less than about 3000 reinforcing fibres, for example, or no less than about 6000 reinforcing fibres, or no less than about 12000 reinforcing fibres. Each of the reinforcing fibre tows may contain no more than about 12000 reinforcing fibres, for example, or no more than about 6000 reinforcing fibres, or no more than about 3000 reinforcing fibres. Each of the reinforcing fibre tows may contain from about 3000 to about 12000 reinforcing fibres. Each of the reinforcing fibre tows may be 3K, 6K or 12K reinforcing fibre tows.

The reinforcing fibre tows may be spread tows. It will be appreciated that a spread tow is formed by spreading out a reinforcing fibre tow to form a thin, flat unidirectional tape. Alternatively, the reinforcing fibre tows may be conventional, non-spread tows.

The reinforcing fibre tows may be made of any suitable material for a given application. For example, the reinforcing fibre tows may be carbon fibre tows, for example, obtained from the HexTow^{®} line available from Hexcel Corporation, USA, the TORAYCA^{®} line available from Toray Composite Materials America, Inc., USA, or the Tenax^{™} line available from Teijin Carbon Europe GmbH, Germany. Alternatively, the reinforcing fibre tows may be glass fibre tows, aramid fibre tows or basalt fibre tows.

One or more (e.g. each) of the plurality of thermoplastic polymer yarns may be woven into the structure of the woven reinforcing fibre fabric parallel to a (i.e. corresponding) reinforcing fibre tow. That is to say, one or more of (e.g. each) of the one or more thermoplastic polymer yarns may be fed into the loom with a (i.e. corresponding) reinforcing fibre tow so that each said thermoplastic polymer yarn runs through the structure along (e.g. beside) the (i.e. corresponding) reinforcing fibre tow.

One or more (e.g. each) of the plurality of thermoplastic polymer yarns may be woven into the structure within a reinforcing fibre tow. For example, one or more (e.g. each) of the one or more thermoplastic polymer yarns may be fed into the loom sandwiched within a (i.e. corresponding) reinforcing fibre tow. The reinforcing fibre tow within which the one or more thermoplastic polymer yarns is sandwiched may itself be a composite reinforcing fibre tow comprising two or more reinforcing fibre tows. For example, one or more thermoplastic polymer yarns may be sandwiched between two reinforcing fibre tows to form a composite reinforcing tow. Alternatively, one or more thermoplastic polymer yarns may be sandwiched between three reinforcing fibre tows, or four reinforcing fibre tows, or five reinforcing fibre tows, and so on. The number of reinforcing fibre tows used to form the composite reinforcing fibre tow may be selected based on the tow ratings of each of the available reinforcing fibre tows (i.e. the number of fibres bundled together to form each tow) to target a desired tow rating for the composite reinforcing fibre tow.

For example, one or more (e.g. each) of the one or more thermoplastic polymer yarns may be fed into the loom sandwiched within a (i.e. corresponding) 12K carbon fibre tow. For example, one or more (e.g. each) of the one or more thermoplastic polymer yarns may be fed into the loom sandwiched within a (i.e. corresponding) 12K carbon fibre tow, wherein each 12K carbon fibre tow is a composite carbon fibre tow made up of two 6K carbon fibre tows, the thermoplastic polymer yarn being disposed between the two 6K carbon fibre tows. Alternatively, one or more (e.g. each) of the one or more thermoplastic polymer yarns may be fed into the loom sandwiched within a (i.e. corresponding) 12K carbon fibre tow, wherein each 12K carbon fibre tow is a composite carbon fibre tow made up of four 3K carbon fibre tows, the thermoplastic polymer yarn being disposed between the four 3K carbon fibre tows.

One or more (e.g. each) of the plurality of thermoplastic polymer yarns may be woven into the structure twisted into and/or around a (i.e. corresponding) reinforcing fibre tow.

The thermoplastic polymer yarns may be distributed evenly throughout the woven reinforcing fibre fabric. For example, the thermoplastic polymer yarns may be woven into the woven reinforcing fibre fabric with a regular spacing, i.e. the thermoplastic polymer yarns may be spaced evenly apart within the woven structure. For example, it may be that a thermoplastic polymer yarn is woven into the 2D woven reinforcing fibre fabric with every weft and/or warp reinforcing fibre tow, or with every second weft and/or warp reinforcing fibre tow, or with every third weft and/or warp reinforcing fibre tow, and so on, depending on the amount of thermoplastic polymer required. Alternatively, it may be that a thermoplastic polymer yarn is woven into the 3D woven reinforcing fibre fabric with every weft, warp and/or binder reinforcing fibre tow, or with every second weft, warp and/or binder reinforcing fibre tow, or with every third weft, warp and/or binder reinforcing fibre tow, and so on, depending on the amount of thermoplastic polymer required.

The method may comprise weaving the plurality of reinforcing fibre tows and the plurality of thermoplastic polymer yarns together, thereby producing the woven reinforcing fibre fabric. The method may comprise weaving at least some of (e.g. all of) the plurality of thermoplastic polymer yarns in the weft direction. The method may further comprise weaving some of the plurality of thermoplastic polymer yarns in the warp direction (for a 2D or 3D woven reinforcing fibre fabric) and/or the binder direction (for a 3D woven reinforcing fibre fabric).

In some examples, the method comprises weaving the plurality of reinforcing fibres tows together in the loom and applying polymer-based binder powder to the plurality of reinforcing fibre tows. The method may comprise heating the woven reinforcing fibre fabric (e.g. under tension) as it exits the loom to cause the polymer-based binder powder to melt and/or cure. Melting and/or curing of the polymer-based binder powder may cause adjacent reinforcing fibre tows to bond to one another.

The polymer-based binder powder may comprise (e.g. comprise predominantly, or consist essentially of, consist of, or be formed from) one or more thermoplastic polymers. For example, the polymer-based binder powder may be a thermoplastic polymer-based binder powder. For example, the polymer-based binder powder may comprise (e.g. comprise predominantly, or consist essentially of, consist of, or be formed from) one or more of: polyacrylic acids; acrylonitrile butadiene styrene; polyamides; polylactic acids; polycarbonates; polyether sulfones; polyoxymethylene; polyether ether ketones; polyetherimides; polyolefins (i.e. polyalkenes) such as polyethylene and/or polypropylene; polystyrene; polyvinyl chloride; polyvinylidene fluoride; and/or polytetrafluoroethylene. A polymer-based binder powder which comprises one or more thermoplastic polymers may melt on heating.

The polymer-based binder powder may comprise (e.g. comprise predominantly, or consist essentially of, or consist of) one or more thermosetting polymers or precursors therefor. For example, the polymer-based binder powder may be a thermosetting polymer-based binder powder. For example, the polymer-based binder powder may comprise (e.g. comprise predominantly, or consist essentially of, consist of, or be formed from) one or more of: polyesters (e.g. polyester resins, for example, isophthalic polyester resins and/or unsaturated polyester resins); UV-curable monomers; vinyl esters (e.g. vinyl ester resins, for example, bisphenol A vinyl esters such as VR-60); acrylic resins (e.g. acrylic resins with epoxy and unsaturated groups, such as PD-3402); polyamides; epoxy resins (e.g. catalysed epoxy resins and/or non-catalysed epoxy resins, for example, bismaleimide triazine epoxy (BT-epoxy) resin); acrylonitriles; phthalonitrile resins; vinyl chlorides; and/or acrylonitrile-vinyl chloride copolymers. A polymer-based binder powder which comprises one or more thermosetting polymers or precursors therefor may cure on heating. A polymer-based binder powder which comprises one or more thermosetting polymers or precursors may melt before and/or during the curing process.

The polymer-based binder powder may comprise one or more thermoplastic polymers and one or more thermosetting polymers or precursors. For example, the polymer-based binder powder may be a polymer-based binder powder which combines both thermoplastic polymers and thermosetting polymers.

Applying the polymer-based binder powder to the plurality of reinforcing fibre tows may comprise applying polymer-based binder powder to the woven reinforcing fibre fabric. Additionally or alternatively, polymer-based binder powder may be applied to the plurality of reinforcing fibre tows as the woven reinforcing fibre fabric is being woven. Additionally or alternatively, polymer-based binder powder may be applied to the plurality of reinforcing fibre tows before the woven reinforcing fibre fabric is woven. Accordingly, the polymer-based binder powder may be applied to the woven reinforcing fibre fabric within the loom and/or outside the loom (e.g. as the woven reinforcing fibre fabric exits the loom and/or as the reinforcing fibre tows enter the loom). The polymer-based binder powder may be applied manually or application of the polymer-based binder powder may be automated.

In some examples, at least some of the reinforcing fibre tows have a polymer-based coating. The method may comprise heating the woven reinforcing fibre fabric (e.g. under tension) as it exits the loom to cause the polymer-based coating to melt and/or cure. Melting and/or curing of the polymer-based coating may bond adjacent reinforcing fibre tows together.

The polymer-based coating may comprise (e.g. comprise predominantly, or consist essentially of, consist of, or be formed from) one or more thermoplastic polymers. For example, the polymer-based coating may be a thermoplastic polymer-based coating. For example, the polymer-based coating may comprise (e.g. comprise predominantly, or consist essentially of, consist of, or be formed from) one or more of: polyacrylic acids; acrylonitrile butadiene styrene; polyamides; polylactic acids; polycarbonates; polyether sulfones; polyoxymethylene; polyether ether ketones; polyetherimides; polyolefins (i.e. polyalkenes) such as polyethylene and/or polypropylene; polystyrene; polyvinyl chloride; polyvinylidene fluoride; and/or polytetrafluoroethylene. A polymer-based coating which comprises one or more thermoplastic polymers may melt on heating.

The polymer-based coating may comprise (e.g. comprise predominantly, or consist essentially of, or consist of) one or more thermosetting polymers or precursors therefor. For example, the polymer-based coating may be a thermosetting polymer-based coating. For example, the polymer-based coating may comprise (e.g. comprise predominantly, or consist essentially of, consist of, or be formed from) one or more of: polyesters (e.g. polyester resins, for example, isophthalic polyester resins and/or unsaturated polyester resins); UV-curable monomers; vinyl esters (e.g. vinyl ester resins, for example, bisphenol A vinyl esters such as VR-60); acrylic resins (e.g. acrylic resins with epoxy and unsaturated groups, such as PD-3402); polyamides; epoxy resins (e.g. catalysed epoxy resins and/or non-catalysed epoxy resins, for example, bismaleimide triazine epoxy (BT-epoxy) resin); acrylonitriles; phthalonitrile resins; vinyl chlorides; and/or acrylonitrile-vinyl chloride copolymers. A polymer-based coating which comprises one or more thermosetting polymers or precursors therefor may cure on heating. A polymer-based coating which comprises one or more thermosetting polymers may melt before and/or during the curing process.

The polymer-based coating may comprise one or more thermoplastic polymers and one or more thermosetting polymers or precursors therefor. For example, the polymer-based coating may be a polymer-based coating which combines both thermoplastic polymers and thermosetting polymers.

The polymer-based coating may be sizing. That is to say, at least some of the reinforcing fibre tows may be coated with (i.e. polymer-based) sizing.

It may be that the majority of the reinforcing fibre tows are coated with the polymer-based coating (e.g. sizing). It may be that substantially all of the reinforcing fibre tows are coated with the polymer-based coating (e.g. sizing). It may be that all of the reinforcing fibre tows are coated with the polymer-based coating (e.g. sizing).

The method may comprise coating the reinforcing fibre tows with the polymer-based coating prior to weaving the woven reinforcing fibre fabric. Alternatively, the method may comprise: providing a plurality of reinforcing fibre tows coated with the polymer-based coating; and weaving the coated reinforcing fibre tows together to form the woven reinforcing fibre fabric.

It will be appreciated that any of the methods described hereinabove for introducing polymeric material into the woven reinforcing fibre fabric may be combined with one another. For example, the method may comprise weaving the plurality of reinforcing fibre tows and the plurality of thermoplastic polymer yarns together and applying the polymer-based binder powder. The method may comprise weaving the plurality of reinforcing fibre tows and the plurality of thermoplastic polymer yarns together, wherein at least some of the reinforcing fibre tows have a polymer-based coating. The method may comprise weaving the woven reinforcing fibre fabric using reinforcing fibre tows which have a polymer-based coating and applying the polymer-based binder powder. In some examples, the method includes using reinforcing fibre tows which have a polymer-based coating, using thermoplastic polymer yarns and using a polymer-based binder powder. In other examples, the method involves using only one of the methods described herein for introducing polymeric material into the woven reinforcing fibre fabric.

The method comprises heating the woven reinforcing fibre fabric as it exits the loom. The method may comprise heating the woven reinforcing fibre fabric immediately after it has been woven within the loom. In particular, the method may comprise heating the woven reinforcing fibre fabric after carrying out a beat-up operation. For example, the method may comprise heating the woven reinforcing fibre fabric immediately after carrying out the beat-up operation. It will be appreciated that a beat-up operation is an operation during which a batten or beater in the loom pushes a newly created weft pick into the woven structure (i.e. at the fell of the woven reinforcing fibre fabric).

The method may comprise heating the woven reinforcing fibre fabric as it exits the loom using a heat source. The heat source may be a directed heat source. The directed heat source may be configured (i.e. positioned and arranged) to heat the woven reinforcing fibre fabric. The directed heat source may be configured (i.e. positioned and arranged) to direct energy and/or heat towards the woven reinforcing fibre fabric.

The directed heat source may be a directed infra-red heat source. The directed infra-red heat source may be configured to direct infra-red electromagnetic radiation towards the woven reinforcing fibre fabric to cause heating of the woven reinforcing fibre fabric. The directed infra-red heat source may comprise (e.g. be) one or more infra-red heat lamps.

It will be appreciated that other types of (e.g. directed) heat source are possible. For example, the (e.g. directed) heat source may comprise (e.g. be) a resistive heating element.

The method may comprise heating the woven reinforcing fibre fabric to a temperature no less than about 50 °C, for example, no less than about 75 °C, or no less than about 90 °C, or no less than about 100 °C, or no less than about 125 °C, or no less than about 150 °C, or no less than about 175 °C, or no less than about 200 °C. The method may comprise heating the woven reinforcing fibre fabric to a temperature no greater than about 250 °C, for example, no greater than about 225 °C, or no greater than about 200 °C, or no greater than about 175°C, or no greater than about 150 °C, or no greater than about 125 °C, or no greater than about 100 °C. The method may comprise heating the woven reinforcing fibre fabric to a temperature from about 50 °C to about 250 °C, for example, from about 50 °C to about 225 °C, or from about 50 °C to about 200 °C, or from about 50 °C to about 175 °C, or from about 50 °C to about 150 °C, or from about 50 °C to about 125 °C, or from about 50 °C to about 100 °C, or from about 75 °C to about 250 °C, or from about 100 °C to about 250 °C, or from about 125 °C to about 250 °C, or from about 150 °C to about 250 °C, or from about 175 °C to about 250 °C, or from about 200 °C to about 250 °C. It will be appreciated that a suitable heating temperature may be selected based on the nature (e.g. chemical composition, linear density and/or quantity) of the polymeric material used.

The method may comprise heating the woven reinforcing fibre fabric for no less than about 1 second, for example, no less than about 5 seconds, or no less than about 10 seconds, or no less than about 30 seconds, or no less than about 1 minute, or no less than about 2 minutes. The method may comprise heating the woven reinforcing fibre fabric for no greater than about 10 minutes, for example, no greater than about 5 minutes, or no greater than about 2 minutes, or no greater than about 1 minute, or no greater than about 30 seconds. The method may comprise heating the woven reinforcing fibre fabric for from about 1 second to about 10 minutes, for example, from about 1 second to about 5 minutes, or from about 1 second to about 1 minute, or from about 10 seconds to about 5 minutes, or from about 10 seconds to about 1 minute, or from about 1 minute to about 10 minutes, or from about 1 minute to about 5 minutes. It will be appreciated that the required length of time for which the woven reinforcing fibre fabric should be heated may depend on the temperature to which the woven reinforcing fibre fabric is heated and the nature of the polymeric material used.

The method may comprise, after heating the woven reinforcing fibre fabric, cooling the woven reinforcing fibre fabric. The method may comprise, after heating the woven reinforcing fibre fabric, cooling the woven reinforcing fibre fabric under tension. The method may comprise cooling the woven reinforcing fibre fabric under tension to no greater than about 50 °C, for example, no greater than about 40 °C, or no greater than about 30 °C, or no greater than about 25 °C, for example, to room temperature. Cooling the woven reinforcing fibre fabric may ensure dimensional stability of the woven reinforcing fibre fabric (or preform formed therefrom) for subsequent handling and/or transfer to a resin transfer mould. It will be appreciated that the temperature to which the woven reinforcing fibre fabric (or preform) should be cooled will depend on the nature of the polymeric material used.

It may be that cooling the woven reinforcing fibre fabric causes the polymeric material to solidify and/or finish curing. Accordingly, cooling the woven reinforcing fibre fabric may effectively convert the woven reinforcing fibre fabric into a preform or a portion thereof.

The method may comprise applying the woven reinforcing fibre fabric onto a tool. The tool may be configured to define a shape for the preform for the composite component. The method may comprise applying the woven reinforcing fibre fabric onto the tool while the woven reinforcing fibre fabric has a temperature such that the polymeric material is molten, soft, moldable and/or pliable, i.e. such that the woven reinforcing fibre fabric is shapable. The method may therefore comprise forming the woven reinforcing fibre fabric into a preform on the tool.

The tool may be a mandrel. The tool may be a rotatable mandrel. Alternatively, the tool may be a table, e.g. a flat haul-off table (for example, for forming flat composite components, for example, from 2D woven reinforcing fibre fabric).

The method may comprise applying tension to the woven reinforcing fibre fabric as it exits the loom. The method may comprise applying longitudinal tension (i.e. in the warp direction) to the woven reinforcing fibre fabric as it exits the loom. For example, the method may comprise pulling the woven reinforcing fibre fabric away from the loom. Tension may be applied to the woven reinforcing fibre fabric using a tensioner. The tensioner may comprise, for example, gripping means (e.g. a grip or clamp) for gripping an edge of the woven reinforcing fibre fabric and pulling means (e.g. a cable) for pulling the woven reinforcing fibre fabric away from the loom. The tensioner may comprise a tool (e.g. a mandrel) and the method may comprise winding the woven reinforcing fibre fabric onto the tool (e.g. the mandrel).

The woven reinforcing fibre fabric may be a two-dimensional (2D) woven reinforcing fibre fabric in which the plurality of reinforcing fibre tows (and any thermoplastic yarns) are woven into a 2D structure. Alternatively, the woven reinforcing fibre fabric may be a three-dimensional (3D) woven reinforcing fibre fabric in which the plurality of reinforcing fibre tows (and any thermoplastic yarns) are woven into a 3D structure.

It will be appreciated that a 3D woven reinforcing fibre fabric is a fabric formed by weaving reinforcing fibre tows in three dimensions, known as *x, y* and *z* directions (or warp, weft and binder directions). 3D woven reinforcing fibre fabrics can be contrasted with 2D woven reinforcing fibre fabrics formed by weaving reinforcing fibre tows in two dimensions, known as *x* and *y* directions (or warp and weft directions).

A 2D woven reinforcing fibre fabric has a two-dimensional, single sheet-like structure, with the *x* and *y* (warp and weft) directions lying "in plane". In contrast, a 3D woven reinforcing fibre fabric includes multiple *x-y* layers and also reinforcing fibre tows running in the *z* (binder) direction. 3D woven reinforcing fibre fabrics are therefore typically thicker than 2D woven reinforcing fibre fabrics (i.e. in the *z,* "out of plane" direction).

The presence of *z* or binder tows in the 3D structure provides a 3D woven reinforcing fibre fabric with enhanced mechanical properties in the out of plane direction as compared with a single 2D woven reinforcing fibre fabric.

A composite component can be manufactured directly from a single 3D woven reinforcing fibre fabric, which is inherently multi-layered, whereas composite preforms manufactured using 2D woven reinforcing fibre fabrics can require the laying up of multiple layers of 2D woven reinforcing fibre fabric to form a laminate having a desired thickness and/or shape.

In composite components manufactured using conventional 2D woven reinforcing fibre fabrics, individual sheets of 2D woven reinforcing fibre fabric are typically bonded to one another only through matrix material. Delamination of individual fabric sheets, and thus impaired impact performance and damage tolerance, can therefore be weaknesses of composite components manufactured using conventional 2D woven reinforcing fibre fabrics. In contrast, multiple layers of 2D woven reinforcing fibre fabric formed by the method according to the first aspect may additionally be bonded to one another by the polymeric material, for example, when the multiple layers are stacked on top of one another while the woven reinforcing fibre fabric is at a temperature at which the polymeric material is molten or tacky. In addition, incorporation of thermoplastic polymer throughout the layers of 2D woven reinforcing fibre fabric can increase the toughness of the resultant composite component.

3D woven reinforcing fibre fabrics typically exhibit much greater resistance to delamination than 2D woven reinforcing fibre fabrics due to the presence of binder fibre tows holding layers of the fabric together. 3D weaving techniques also enable near-net-shape preforms to be manufactured, reducing manufacturing and machining costs, as well as material waste.

The 3D structure of conventional 3D woven reinforcing fibre fabrics can, however, lead to manufacturing problems. In particular, as a result of the weaving process, the 3D structure typically includes air trapped in voids between reinforcing fibre tows (this is known as "lofting"). When a composite component is manufactured using a conventional 3D woven reinforcing fibre fabric, the 3D woven reinforcing fibre fabric is typically first shaped, compressed (i.e. compacted) and stabilised to form a preform, and then the preform is filled with matrix material (for example, by injecting resin into the preform within a resin transfer mould). Compaction of the fabric expels trapped air, facilitating matrix material infiltration and enabling dimensional control. For example, for use in resin transfer moulding, the thickness of the compacted preform must typically be within about 10% of the desired final component thickness to enable a resin transfer mould to close. Stabilisation is typically necessary because otherwise the 3D woven reinforcing fibre fabric remains excessively flexible and is easily deformed when transferring from a compaction mould to a resin transfer mould.

At present, compaction and stabilisation of 3D woven reinforcing fibre fabrics is carried out as an additional manufacturing step between weaving the 3D woven reinforcing fibre fabric and forming a composite component by, e.g. resin transfer moulding. However, the method according to the first aspect enables 3D woven reinforcing fibre fabrics to be stabilised and compacted during manufacture, reducing the number of manufacturing steps required to produce a composite component and therefore also reducing manufacturing costs.

Particular benefits are also achieved when the polymeric material is introduced into the woven reinforcing fibre fabric in the form of thermoplastic polymer yarns. In particular, the placement of the thermoplastic polymer yarns within the 3D woven structure of a 3D woven reinforcing fibre fabric can be controlled accurately, enabling even distribution throughout the fabric regardless of the particular weave pattern. Powder binder can also be considered a skin irritant or a health hazard and use of thermoplastic polymer yarns can, in some examples, reduce the need for powder binder or replace powder binder entirely. The inventors have also found that by weaving thermoplastic polymer yarns into the 2D structure of a 2D woven reinforcing fibre fabric, superior stabilisation can also be achieved. Moreover, when the woven reinforcing fibre fabric is subsequently filled with a polymeric matrix material to form a composite component, the plurality of thermoplastic polymer yarns may also provide the composite component with enhanced toughness. The distribution of thermoplastic polymer throughout the structure can be controlled by the weaving process.

In examples in which the woven reinforcing fibre fabric is a 3D woven reinforcing fibre fabric, the 3D structure of the 3D woven reinforcing fibre fabric may be a through-thickness interlock structure or a layer-to-layer interlock structure. It will be appreciated that, in a through-thickness interlock structure, binder reinforcing fibre tows (and/or thermoplastic polymer yarns, if woven in the binder direction) penetrate through the entire thickness of the fabric (i.e. in the z direction), whereas in a layer-to-layer interlock structure, binder reinforcing fibre tows (and/or thermoplastic polymer yarns, if woven in the binder direction) only hold adjacent layers together.

The 3D structure of the 3D woven reinforcing fibre fabric may be an angle interlock structure or an orthogonal interlock structure. It will be appreciated that, in an angle interlock structure, an interlacing angle between binder reinforcing fibre tows (and/or thermoplastic polymer yarns, if woven in the binder direction) and weft reinforcing fibre tows (and/or thermoplastic polymer yarns, if woven in the weft direction) is less than or greater than about 90°, whereas in an orthogonal interlock structure, the interlacing angle between binder reinforcing fibre tows (and/or thermoplastic polymer yarns, if woven in the binder direction) and weft reinforcing fibre tows (and/or thermoplastic polymer yarns, if woven in the weft direction) is about 90°.

The 2D structure of the 2D woven reinforcing fibre fabric, or the 3D structure of the 3D woven reinforcing fibre fabric, may have any suitable weaving pattern, such as plain, twill or satin.

The woven reinforcing fibre fabric may form a preform for a composite component or a part thereof.

The method may comprise introducing matrix material into the preform to form the composite component or part thereof. The matrix material may be an organic (i.e. polymeric) matrix material such as an epoxy resin, a phenolic resin, an amino resin, a cyanate ester resin, a polyurethane, a polyimide, a polyamide, a bismaleimide, or an phthalonitrile resin. The matrix material may be a thermosetting organic (i.e. polymeric) matrix material. The matrix material is typically introduced into the preform in a liquid form and then cured to form a solid.

The method may comprise injecting the matrix material into the preform in a resin transfer mould (RTM).

The method may comprise forming two or more parts of a composite component by introducing matrix material into two or more preforms manufactured by any of the methods described hereinabove and then assembling the composite component from the two or more parts. The method may comprise forming two or more preforms by any of the methods described hereinabove, assembling the two or more preforms to form a preform assembly for the composite component or part thereof, and then introducing matrix material into the preform assembly to form the composite component or part thereof. Assembling the two or more preforms to form the preform assembly may comprise adhering the two or more preforms together, for example, by way of the thermoplastic polymeric material. For example, the method may comprise heating the two or more preforms together so that the thermoplastic polymeric material melts and adheres the two or more preforms together. Alternatively, the method may comprise bringing the two or more preforms together while the two or more preforms are still warm from an initial heating of the woven reinforcing fibre fabric such that the polymeric material is tacky.

In some examples, the woven reinforcing fibre fabric may be impregnated with partially cured polymeric matrix material and/or one or more precursors for (i.e. which can react to form) polymeric matrix material. The polymeric matrix material is typically a thermosetting polymeric matrix material, such as an epoxy resin, a phenolic resin, an amino resin, a cyanate ester resin, a polyurethane, a polyimide, a polyamide, a bismaleimide, or a phthalonitrile resin. The one or more precursors for the polymeric matrix material may comprise a resin and a hardener. Accordingly, the woven reinforcing fibre fabric may be a pre-impregnated or "pre-preg" woven reinforcing fibre fabric.

In a second aspect, there is provided weaving apparatus comprising: a loom for weaving a woven reinforcing fibre fabric; and a heat source configured to heat the woven reinforcing fibre fabric as it exits the loom.

The heat source may be a directed heat source. The directed heat source may be configured (i.e. positioned and arranged) to heat the woven reinforcing fibre fabric. The directed heat source may be configured (i.e. positioned and arranged) to direct energy and/or heat towards the woven reinforcing fibre fabric.

The directed heat source may be a directed infra-red heat source. The directed infra-red heat source may be configured to direct infra-red electromagnetic radiation towards the woven reinforcing fibre fabric to cause heating of the woven reinforcing fibre fabric. The directed infra-red heat source may comprise (e.g. be) one or more infra-red heat lamps.

It will be appreciated that other types of (e.g. directed) heat source are possible. For example, the (e.g. directed) heat source may comprise (e.g. be) a resistive heating element.

The heat source may be configured (e.g. positioned and/or arranged) to heat the woven reinforcing fibre fabric as it exits the loom. For example, the heat source may be positioned adjacent the loom (e.g. adjacent an exit of the loom). The heat source may be configured (e.g. positioned and/or arranged) to heat the woven reinforcing fibre fabric immediately after it has been woven within the loom. In particular, the heat source may be configured to heat the woven reinforcing fibre fabric (e.g. immediately) downstream of a beat-up point (i.e. a point at which a beat-up operation is carried out).

The heat source may be configured to heat the woven reinforcing fibre fabric to a temperature no less than about 50 °C, for example, no less than about 75 °C, or no less than about 90 °C, or no less than about 100 °C, or no less than about 125 °C, or no less than about 150°C, or no less than about 175 °C, or no less than about 200 °C. The heat source may be configured to heat the woven reinforcing fibre fabric to a temperature no greater than about 250 °C, for example, no greater than about 225 °C, or no greater than about 200 °C, or no greater than about 175°C, or no greater than about 150 °C, or no greater than about 125 °C, or no greater than about 100 °C. The heat source may be configured to heat the woven reinforcing fibre fabric to a temperature from about 50 °C to about 250 °C, for example, from about 50 °C to about 225 °C, or from about 50 °C to about 200 °C, or from about 50 °C to about 175 °C, or from about 50 °C to about 150 °C, or from about 50 °C to about 125 °C, or from about 50 °C to about 100 °C, or from about 75 °C to about 250 °C, or from about 100 °C to about 250 °C, or from about 125 °C to about 250 °C, or from about 150 °C to about 250 °C, or from about 175 °C to about 250 °C, or from about 200 °C to about 250 °C. It will be appreciated that a suitable heating temperature may be selected based on the nature (e.g. chemical composition, linear density and/or quantity) of the polymeric material used.

The heat source may be configured to heat the woven reinforcing fibre fabric for no less than about 1 second, for example, no less than about 5 seconds, or no less than about 10 seconds, or no less than about 30 seconds, or no less than about 1 minute, or no less than about 2 minutes. The heat source may be configured to heat the woven reinforcing fibre fabric for no greater than about 10 minutes, for example, no greater than about 5 minutes, or no greater than about 2 minutes, or no greater than about 1 minute, or no greater than about 30 seconds. The heat source may be configured to heat the woven reinforcing fibre fabric for from about 1 second to about 10 minutes, for example, from about 1 second to about 5 minutes, or from about 1 second to about 1 minute, or from about 10 seconds to about 5 minutes, or from about 10 seconds to about 1 minute, or from about 1 minute to about 10 minutes, or from about 1 minute to about 5 minutes. It will be appreciated that the required length of time for which the woven reinforcing fibre fabric should be heated may depend on the temperature to which the woven reinforcing fibre fabric is heated and the nature of the polymeric material used.

The apparatus may comprise a tensioner for applying tension to the woven reinforcing fibre fabric as it exits the loom.

The tensioner may comprise, for example, gripping means (e.g. a grip or clamp) for gripping an edge of the woven reinforcing fibre fabric and pulling means (e.g. a cable) for pulling the woven reinforcing fibre fabric away from the loom.

The tensioner may comprise a tool (e.g. a mandrel) configured to receive and draw the woven reinforcing fibre fabric away from the loom. For example, the tensioner may comprise a rotatable mandrel configured to receive and draw the woven reinforcing fibre fabric away from the loom. Alternatively, the tensioner may comprise a (e.g. flat) haul-off table configured to receive and draw the woven reinforcing fibre fabric away from the loom.

The loom may be any type of loom suitable for weaving reinforcing fibre tows into woven reinforcing fibre fabrics. For example, the loom may be any suitable type of Dobby loom or Jacquard loom. Suitable looms are available from, for example, Lindauer Dornier GmbH, Germany. Suitable Jacquards (which can be used with looms available from Lindauer Dornier GmbH) are available from, for example, Stäubli International AG, Switzerland.

The loom may be for weaving a 2D woven reinforcing fibre fabric. Additionally or alternatively, the loom may be for weaving a 3D woven reinforcing fibre fabric.

The apparatus may comprise one or more controllers. The apparatus may comprise a loom controller for controlling operation of the loom to weave the woven reinforcing fibre fabric. The apparatus may comprise a heater controller for controlling operation of the heat source. The apparatus may comprise a tensioner controller for controlling operation of the tensioner. The apparatus may comprise a controller which carries out the roles of two or more of a loom controller, a heater controller and a tensioner controller. For example, the apparatus may comprise a controller which controls operation of the loom, the heater and the tensioner.

The or each controller may comprise a processor configured (e.g. programmed) to control operation of the loom, the heater and/or the tensioner (as appropriate). For example, the or each processor may be in electrical communication with a memory storing computer-readable program code comprising instructions which, when executed by the processor, cause the processor to control operation of the loom, the heater and/or the tensioner (as appropriate).

The apparatus may comprise one or more sensors for measuring an operating parameter of the apparatus. For example, the apparatus may comprise one or more temperature sensors for monitoring a temperature of the woven reinforcing fibre fabric, a temperature close to the woven reinforcing fibre fabric and/or a temperature of the heater. The controller may be communicatively coupled to the one or more sensors such that the controller may be configured to receive one or more outputs from the one or more sensors indicative of the measured operating parameter. The controller may be configured to take the one or more outputs into account when controlling operation of the loom, the heater and/or the tensioner. For example, the controller may be configured to take into account an output indicative of the temperature of the woven reinforcing fibre fabric, a temperature close to the woven reinforcing fibre fabric and/or a temperature of the heater when controlling operation of the heater.

The apparatus may be configured to carry out the method according to the first aspect.

The apparatus may comprise a warp tow supply and a weft tow supply. The apparatus may further comprise a binder tow supply. Any of the warp tow supply, the weft tow supply and the binder tow supply (if present) may comprise one or more reinforcing fibre tow supply feeds and optionally one or more thermoplastic polymer yarn supply feeds, dependent on the woven reinforcing fibre fabric to be woven.

According to a third aspect, there is provided a preform for a composite component manufactured by the method according to the first aspect, for example, using the apparatus according to the second aspect.

According to a fourth aspect, there is provided a composite component manufactured by the method according to the first aspect, for example, using the apparatus according to the second aspect.

For each of the third and fourth aspects, the composite component may be an aircraft component.

The composite component may be a component of a gas turbine engine.

The composite component may be, for example, a panel, a stator vane, a hollow structure, a structural frame, an airframe component such as a fuselage frame or a reinforced skin, a fan blade, or fan containment case.

The composite component may be a 3D shaped composite component. It will be appreciated that a 3D shaped composite component has a macroscopic 3D shape, i.e. the 3D shaped composite component is not entirely flat (e.g. not sheet-like).

Alternatively, the composite component may be a 2D shaped composite component. It will be appreciated that a 2D shaped composite component is flat or sheet-like.

According to a fifth aspect, there is provided a preform for a composite component, the preform comprising a woven reinforcing fibre fabric comprising a plurality of reinforcing fibre tows woven together, wherein reinforcing fibre tows of the woven reinforcing fibre fabric are bonded to one another by polymeric material.

The woven reinforcing fibre fabric may have any of the properties of the woven reinforcing fibre fabric described hereinabove with regard to the first aspect.

The polymeric material may be thermoplastic polymeric material. The woven reinforcing fibre fabric may comprise a plurality of thermoplastic polymer yarns. That is to say, the thermoplastic polymeric material may be provided in the form of a plurality of thermoplastic polymer yarns. The thermoplastic polymer yarns may have any of the properties of the thermoplastic polymer yarns described hereinabove with regard to the first aspect. The thermoplastic polymer yarns may have been partially or entirely melted.

The thermoplastic polymeric material may comprise (e.g. be, consist of or consist essentially of) one or more of: polyacrylic acids; acrylonitrile butadiene styrene; polyamides; polylactic acids; polycarbonates; polyether sulfones; polyoxymethylene; polyether ether ketones; polyetherimides; polyolefins (i.e. polyalkenes) such as polyethylene and/or polypropylene; polystyrene; polyvinyl chloride; polyvinylidene fluoride; and/or polytetrafluoroethylene.

The thermoplastic polymeric material may comprise (e.g. be, consist of or consist essentially of) a polyamide. The polyamide may be an aliphatic polyamide such as nylon 6 or nylon 6,6 (i.e. PA 6 or PA 66). The polyamide may be a polyphthalamide such as PA 6T. The polyamide may be an aromatic polyamide (i.e. an aramid) such as Kevlar^{®}, Nomex^{®}, Twaron^{®}, Technora^{®} or Kermel^{®}.

The thermoplastic polymeric material may comprise (e.g. be, consist of or consist essentially of) an aliphatic polyamide such as nylon 6 or nylon 6,6 (i.e. PA 6 or PA 66), for example, available in the Grilon^{®} line produced by EMS-GRIVORY, a division of EMS-CHEMIE AG, Switzerland.

The preform may comprise no less than about 1.0 wt. %, for example, no less than about 1.2 wt. %, or no less than about 1.4 wt. %, or no less than about 1.5 wt. %, or no less than about 2.0 wt. %, or no less than about 3.0 wt. %, or no less than about 3.5 wt. %, thermoplastic polymer. The preform may comprise no greater than about 8.0 wt. %, for example, no greater than about 7.5 wt. %, or no greater than about 7.0 wt. %, or no greater than about 6.5 wt. %, or no greater than about 6.0 wt. %, or no greater than about 5.5 wt. %, or no greater than about 5.4 wt. %, or no greater than about 5.2 wt. %, or no greater than about 5.0 wt. %, or no greater than about 4.0 wt. %, thermoplastic polymer. The preform may comprise from about 1.0 wt. % to about 8.0 wt. %, for example, from about 1.0 wt. % to about 7.5 wt. %, or from about 1.2 wt. % to about 5.4 wt. %, or from about 1.4 wt. % to about 5.4 wt. %, or from about 1.4 wt. % to about 5.2 wt. %, or from about 1.5 wt. % to about 5.0 wt. %, or from about 2.0 wt. % to about 5.0 wt. %, or from about 1.5 wt. % to about 4.0 wt. %, thermoplastic polymer.

The preform may comprise no less than about 1.0 wt. %, for example, no less than about 1.2 wt. %, or no less than about 1.4 wt. %, or no less than about 1.5 wt. %, or no less than about 2.0 wt. %, or no less than about 3.0 wt. %, or no less than about 3.5 wt. %, aliphatic polyamide such as nylon 6 or nylon 6,6 (i.e. PA 6 or PA 66), for example, available in the Grilon^{®} line produced by EMS-GRIVORY, a division of EMS-CHEMIE AG, Switzerland. The preform may comprise no greater than about 8.0 wt. %, for example, no greater than about 7.5 wt. %, or no greater than about 7.0 wt. %, or no greater than about 6.5 wt. %, or no greater than about 6.0 wt. %, or no greater than about 5.5 wt. %, or no greater than about 5.4 wt. %, or no greater than about 5.2 wt. %, or no greater than about 5.0 wt. %, or no greater than about 4.0 wt. %, aliphatic polyamide such as nylon 6 or nylon 6,6 (i.e. PA 6 or PA 66), for example, available in the Grilon^{®} line produced by EMS-GRIVORY, a division of EMS-CHEMIE AG, Switzerland. The preform may comprise from about 1.0 wt. % to about 8.0 wt. %, for example, from about 1.0 wt. % to about 7.5 wt. %, or from about 1.2 wt. % to about 5.4 wt. %, or from about 1.4 wt. % to about 5.4 wt. %, or from about 1.4 wt. % to about 5.2 wt. %, or from about 1.5 wt. % to about 5.0 wt. %, or from about 2.0 wt. % to about 5.0 wt. %, or from about 1.5 wt. % to about 4.0 wt. %, aliphatic polyamide such as nylon 6 or nylon 6,6 (i.e. PA 6 or PA 66), for example, available in the Grilon^{®} line produced by EMS-GRIVORY, a division of EMS-CHEMIE AG, Switzerland.

The thermoplastic polymer may be distributed evenly throughout the preform.

The reinforcing fibre tows may be predominantly bonded to one another by polymeric material at reinforcing fibre crossover locations. That is to say, each reinforcing fibre tow may be bonded to other reinforcing fibre tows predominantly at locations at which the reinforcing fibre tow is closest to neighbouring reinforcing fibre tows in the woven structure. Each reinforcing fibre tow may not be bonded to neighbouring reinforcing fibre tows at other locations. The reinforcing fibre tows may be predominantly bonded to one another at reinforcing fibre crossover locations by thermoplastic polymeric material and/or by thermosetting polymeric material. Any suitable thermoplastic polymers and/or thermosetting polymers as described hereinabove in relation to the first aspect may be used.

The woven reinforcing fibre fabric may be a 2D woven reinforcing fibre fabric. Alternatively, the woven reinforcing fibre fabric may be a 3D woven reinforcing fibre fabric.

The preform may comprise a plurality of layers. For example, the preform may comprise two or more layers of woven reinforcing fibre fabric. For example, the preform may comprise two or more layers of 2D woven reinforcing fibre fabric. For example, the preform may comprise two or more layers of 2D woven reinforcing fibre fabric stacked on top of one another (i.e. a stack of 2D woven reinforcing fibre fabric layers). The two or more layers of 2D woven reinforcing fibre fabric may be stacked directly on top of one another, for example, such that the two or more layers of 2D woven reinforcing fibre fabric are in direct contact with one another. Alternatively, the two or more layers of 2D woven reinforcing fibre fabric may be stacked on top of one another such that the two or more layers of 2D woven reinforcing fibre fabric are spaced apart from one another by one or more intervening layers. Said one or more intervening layers may comprise one or more layers of non-woven reinforcing fibres, one or more layers of 3D woven reinforcing fibre fabric, and/or one or more layers of polymeric material (such as thermoplastic polymeric material). The two or more layers of 2D woven reinforcing fibre fabric may be two or more layers of the same (i.e. same type of) 2D woven reinforcing fibre fabric. Alternatively, the two or more layers of 2D woven reinforcing fibre fabric may comprise two or more layers of different (i.e. different types of) 2D woven reinforcing fibre fabric. The two or more layers of 2D woven reinforcing fibre fabric may be bonded to one another by the polymeric material.

The preform may be a 2D shaped preform. It will be appreciated that a 2D shaped preform has a macroscopic 2D shape, i.e. the 2D shaped preform is flat or sheet-like.

Alternatively, the preform may be a 3D shaped preform. It will be appreciated that a 3D shaped preform has a macroscopic 3D shape, i.e. the 3D shaped preform is not entirely flat (e.g. not sheet-like).

The plurality of reinforcing fibre tows may have any of the properties of the reinforcing fibre tows described hereinabove with regard to the first aspect.

The preform may be manufactured by the method according to the first aspect.

The composite component may be an aircraft component.

The composite component may be a component of a gas turbine engine.

The composite component may be, for example, a panel, a stator vane, a hollow structure, a structural frame, an airframe component such as a fuselage frame or a reinforced skin, a fan blade, or fan containment case.

The composite component may be a 2D shaped composite component or a 3D shaped composite component.

According to a sixth aspect, there is provided a composite component comprising a fibre-reinforced composite material, the fibre-reinforced composite material comprising a polymeric matrix and a woven reinforcing fibre fabric reinforcement, wherein the woven reinforcing fibre fabric reinforcement comprises a plurality of reinforcing fibre tows woven together and bonded to one another in part by a polymeric material different from the polymeric matrix.

The polymeric material may be thermoplastic polymeric material.

The thermoplastic polymeric material may comprise (e.g. be, consist of or consist essentially of) one or more of: polyacrylic acids; acrylonitrile butadiene styrene; polyamides; polylactic acids; polycarbonates; polyether sulfones; polyoxymethylene; polyether ether ketones; polyetherimides; polyolefins (i.e. polyalkenes) such as polyethylene and/or polypropylene; polystyrene; polyvinyl chloride; polyvinylidene fluoride; and/or polytetrafluoroethylene.

The thermoplastic polymeric material may comprise (e.g. be, consist of or consist essentially of) a polyamide. The polyamide may be an aliphatic polyamide such as nylon 6 or nylon 6,6 (i.e. PA 6 or PA 66). The polyamide may be a polyphthalamide such as PA 6T. The polyamide may be an aromatic polyamide (i.e. an aramid) such as Kevlar^{®}, Nomex^{®}, Twaron^{®}, Technora^{®} or Kermel^{®}.

The thermoplastic polymeric material may comprise (e.g. be, consist of or consist essentially of) an aliphatic polyamide such as nylon 6 or nylon 6,6 (i.e. PA 6 or PA 66), for example, available in the Grilon^{®} line produced by EMS-GRIVORY, a division of EMS-CHEMIE AG, Switzerland.

The fibre-reinforced composite material may comprise no less than about 1.0 wt. %, for example, no less than about 1.2 wt. %, or no less than about 1.4 wt. %, or no less than about 1.5 wt. %, or no less than about 2.0 wt. %, or no less than about 2.2 wt. %, or no less than about 2.4 wt. %, or no less than about 3.0 wt. %, thermoplastic polymer. The fibre-reinforced composite material may comprise no greater than about 5.5 wt. %, for example, no greater than about 5.4 wt. %, or no greater than about 5.2 wt. %, or no greater than about 5.0 wt. %, or no greater than about 4.0 wt. %, or no greater than about 3.5 wt. %, or no greater than about 3.0 wt. %, or no greater than about 2.6 wt. %, or no greater than about 2.4 wt. %, thermoplastic polymer. The fibre-reinforced composite material may comprise from about 1.0 wt. % to about 5.5 wt. %, for example, from about 1.2 wt. % to about 5.4 wt. %, or from about 1.4 wt. % to about 5.4 wt. %, or from about 1.4 wt. % to about 5.2 wt. %, or from about 1.5 wt. % to about 5.0 wt. %, or from about 2.0 wt. % to about 5.0 wt. %, or from about 1.5 wt. % to about 4.0 wt. %, or from about 2.0 wt. % to about 3.0 wt. %, or from about 2.2 wt. % to about 2.6 wt. %, thermoplastic polymer.

The fibre-reinforced composite material may comprise no less than about 1.0 wt. %, for example, no less than about 1.2 wt. %, or no less than about 1.4 wt. %, or no less than about 1.5 wt. %, or no less than about 2.0 wt. %, or no less than about 2.2 wt. %, or no less than about 2.4 wt. %, or no less than about 3.0 wt. %, aliphatic polyamide such as nylon 6 or nylon 6,6 (i.e. PA 6 or PA 66), for example, available in the Grilon^{®} line produced by EMS-GRIVORY, a division of EMS-CHEMIE AG, Switzerland. The fibre-reinforced composite material may comprise no greater than about 5.5 wt. %, for example, no greater than about 5.4 wt. %, or no greater than about 5.2 wt. %, or no greater than about 5.0 wt. %, or no greater than about 4.0 wt. %, or no greater than about 3.5 wt. %, or no greater than about 3.0 wt. %, or no greater than about 2.6 wt. %, or no greater than about 2.4 wt. %, aliphatic polyamide such as nylon 6 or nylon 6,6 (i.e. PA 6 or PA 66), for example, available in the Grilon^{®} line produced by EMS-GRIVORY, a division of EMS-CHEMIE AG, Switzerland. The fibre-reinforced composite material may comprise from about 1.0 wt. % to about 5.5 wt. %, for example, from about 1.2 wt. % to about 5.4 wt. %, or from about 1.4 wt. % to about 5.4 wt. %, or from about 1.4 wt. % to about 5.2 wt. %, or from about 1.5 wt. % to about 5.0 wt. %, or from about 2.0 wt. % to about 5.0 wt. %, or from about 1.5 wt. % to about 4.0 wt. %, or from about 2.0 wt. % to about 3.0 wt. %, or from about 2.2 wt. % to about 2.6 wt. %, aliphatic polyamide such as nylon 6 or nylon 6,6 (i.e. PA 6 or PA 66), for example, available in the Grilon^{®} line produced by EMS-GRIVORY, a division of EMS-CHEMIE AG, Switzerland.

The fibre-reinforced composite material (e.g. the woven reinforcing fibre fabric reinforcement) may comprise a plurality of thermoplastic polymer yarns. That is to say, the thermoplastic polymeric material may be provided in the form of a plurality of thermoplastic polymer yarns. The thermoplastic polymer yarns may have any of the properties of the thermoplastic polymer yarns described hereinabove with regard to the first aspect.

The thermoplastic polymer yarns may have been partially or entirely melted.

The thermoplastic polymer may be distributed evenly throughout the fibre-reinforced composite material (e.g. the (e.g. 2D or 3D) woven reinforcing fibre fabric reinforcement).

The reinforcing fibre tows may be bonded to one another by the polymeric material predominantly at reinforcing fibre crossover locations and by the polymeric matrix at other locations. That is to say, each reinforcing fibre tow may be bonded to other reinforcing fibre tows by the polymeric material predominantly at locations at which the reinforcing fibre tow is closest to neighbouring reinforcing fibre tows in the woven structure, and each reinforcing fibre tow may be bonded to neighbouring reinforcing fibre tows at other locations predominantly by the polymeric matrix. The reinforcing fibre tows may be bonded to one another at reinforcing fibre crossover locations by thermoplastic polymeric material and/or by thermosetting polymeric material. Any suitable thermoplastic polymers and/or thermosetting polymers as described hereinabove in relation to the first aspect may be used.

The composite component may be formed entirely from the fibre-reinforced composite material. Alternatively, it may be that one or more portions of the composite component are formed from the fibre-reinforced composed material.

The polymeric matrix may comprise (e.g. consist of, or consist essentially of) polymeric matrix material such as an epoxy resin, a phenolic resin, an amino resin, a cyanate ester resin, a polyurethane, a polyimide, a polyamide, a bismaleimide, or a phthalonitrile resin. The polymeric matrix material may be a thermosetting polymeric matrix material.

The plurality of reinforcing fibre tows woven together constitute a woven reinforcing fibre fabric. The woven reinforcing fibre fabric may have any of the properties of the woven reinforcing fibre fabric described hereinabove with regard to the first aspect.

In particular, the woven reinforcing fibre fabric may be a 2D woven reinforcing fibre fabric in which the plurality of reinforcing fibre tows are woven into a 2D structure. Alternatively, the woven reinforcing fibre fabric may be a 3D woven reinforcing fibre fabric in which the plurality of reinforcing fibre tows are woven into a 3D structure.

Accordingly, the woven reinforcing fibre fabric reinforcement may be a 2D woven reinforcing fibre fabric reinforcement comprising a 2D woven reinforcing fibre fabric. Alternatively, the woven reinforcing fibre fabric reinforcement may be a 3D woven reinforcing fibre fabric reinforcement comprising a 3D woven reinforcing fibre fabric.

The woven reinforcing fibre fabric reinforcement may comprise a plurality of layers. For example, the woven reinforcing fibre fabric reinforcement may comprise two or more layers of woven reinforcing fibre fabric. For example, the woven reinforcing fibre fabric reinforcement may comprise two or more layers of 2D woven reinforcing fibre fabric.

For example, the woven reinforcing fibre fabric reinforcement may comprise two or more layers of 2D woven reinforcing fibre fabric stacked on top of one another (i.e. a stack of 2D woven reinforcing fibre fabric layers).

The two or more layers of 2D woven reinforcing fibre fabric may be stacked directly on top of one another, for example, such that the two or more layers of 2D woven reinforcing fibre fabric are in direct contact with one another. Alternatively, the two or more layers of 2D woven reinforcing fibre fabric may be stacked on top of one another such that the two or more layers of 2D woven reinforcing fibre fabric are spaced apart from one another by one or more intervening layers. Said one or more intervening layers may comprise one or more layers of non-woven reinforcing fibres, one or more layers of 3D woven reinforcing fibre fabric, and/or one or more layers of polymeric material (such as thermoplastic polymeric material).

The two or more layers of 2D woven reinforcing fibre fabric may be two or more layers of the same (i.e. same type of) 2D woven reinforcing fibre fabric. Alternatively, the two or more layers of 2D woven reinforcing fibre fabric may comprise two or more layers of different (i.e. different types of) 2D woven reinforcing fibre fabric.

The two or more layers of 2D woven reinforcing fibre fabric may be bonded to one another by the polymeric matrix materials. Additionally, the two or more layers of 2D woven reinforcing fibre fabric may be bonded to one another by the polymeric material.

The plurality of reinforcing fibre tows may have any of the properties of the reinforcing fibre tows described hereinabove with regard to the first aspect.

The composite component may be an aircraft component.

The composite component may be a component of a gas turbine engine.

The composite component may be manufactured by the method according to the first aspect, for example, using the apparatus according to the second aspect. The composite component may be formed from the preform according to the third aspect. The composite component may be the composite component according to the fourth aspect.

The skilled person will appreciate that, except where mutually exclusive, a feature or parameter described in relation to any one of the above aspects may be applied mutatis mutandis to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
**Figure** 1 shows (a) a side view of weaving apparatus and (b) a plan view of the weaving apparatus;
**Figure** 2 illustrates (a) a weaving operation and (b) a beat-up operation;
**Figure** 3 shows a schematic side view of weaving apparatus;
**Figure** 4 illustrates a unit cell of a 3D woven structure of a 3D woven reinforcing fibre fabric;
**Figure** 5 is a flowchart illustrating a manufacturing method; and
**Figure** 6 is a schematic side view of a composite aircraft component.

### DETAILED DESCRIPTION

Aspects and embodiments of the present invention will now be discussed with reference to the accompanying figures. Further aspects and embodiments will be apparent to those skilled in the art.

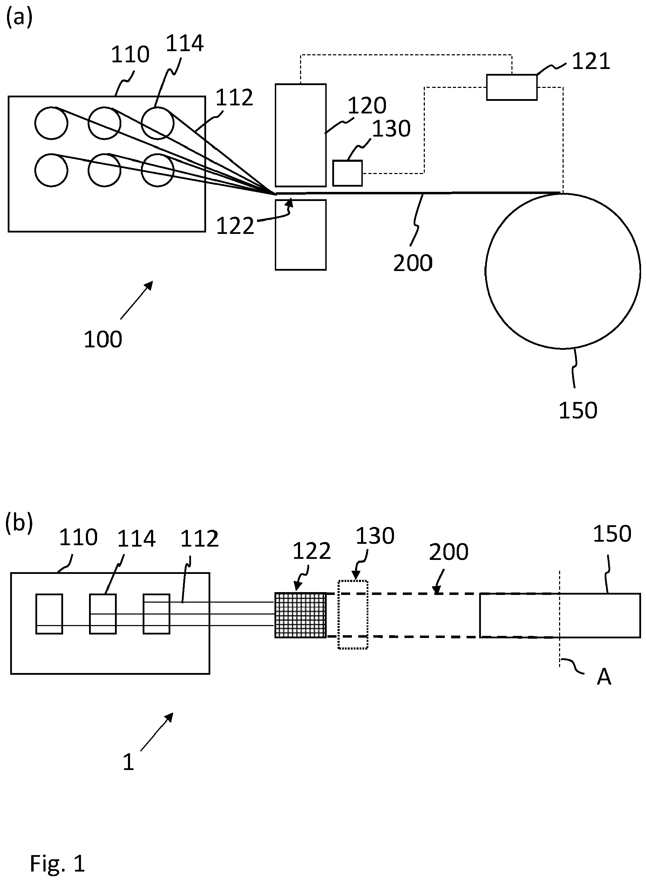

Figures 1 (a) and (b) illustrate apparatus 100 for manufacturing a composite component. Figure 1 (a) shows a schematic side view to illustrate a path of reinforcing fibre tows through the apparatus, whereas Figure 1 (b) schematically shows a plan view of the same apparatus 100.

The apparatus 100 comprises, in order with respect to the passage of warp tows through the apparatus: a warp tow supply 110, a loom 120, an infrared heat source 130 and a rotatable mandrel 150. The warp tow supply 110 is configured to supply warp tows 112 to the loom 120 for weaving with weft tows at a weave location 122 of the loom. The warp tow supply may comprise a plurality of separate tow supply feeds 114 (e.g. separate tow spools on a creel) each configured to independently supply separate warp tows to the weave location 122 of the loom 120.

The loom 120 is configured to weave a woven structure 200 using the warp tows 112 supplied from the warp tow supply 110, weft tows (not shown) and binder tows (not shown) supplied at the loom 120. The loom 120 may be of any suitable type as is known in the art. For complex weaves the loom may be programmable (i.e. configured for computer control) to form woven structures 200 with weave patterns based on computer-readable instructions. Such a loom may be referred to as a computer-controlled jacquard loom. The apparatus 100 comprises a loom controller 121 for controlling the loom 120 to weave the woven structure 200, as will be described in further detail below. As shown in Figure 1 (a), the loom controller 121 may be coupled to the mandrel to monitor or control a speed of rotation of the mandrel, in order to ensure that the woven structure 200 is woven at an appropriate rate. The loom controller 121 may also be coupled to the infrared heat source 120 to monitor or control an amount of heat supplied to the woven structure exiting the loom.

In the example shown in Figure 1, the mandrel 150 is for forming a semi-annular or annular component. The woven structure 200, as it exits the loom, may be referred to herein as a woven reinforcing fibre fabric. Additionally or alternatively, the woven structure 200 as received from the loom after heating may be referred to herein as woven preform 200 to reflect that it forms an integral part of the annular component but must be formed to shape and subsequently cured with matrix material (e.g. by a resin transfer moulding (RTM) technique) to form the component. In the example shown in Figure 1, the mandrel defines a near net shape profile for the composite component. This means that the mandrel defines a profile which is close to the final of the composite component to be manufactured (e.g. except for relatively minor finishing and machining), such that the reader understands that the action of forming the preform woven structure into the shape of the component is conducted by applying the woven fabric (i.e. the preform) to the mandrel 150.

As the near net shape profile of the mandrel is configured to define a radially inner surface of the base of the composite component, it is implicit that the two sides of the woven preform includes a side to be received on the mandrel (a radially-inner side as received on the mandrel), and an opposing side (a radially-outer side as received on the mandrel). In the following invention, the opposing side (the radially-outer as received on the mandrel) is referred to as the first side of the woven preform, and the side to be received on the mandrel (the radially-inner side) is referred to as the second side of the woven preform.

The woven preform is referred to herein as having a longitudinal direction corresponding to the path along which it is discharged from the loom and drawn to the rotatable mandrel, and a lateral direction orthogonal to the longitudinal direction and extending across the woven preform. The longitudinal direction may correspond to a warp direction of the woven preform (i.e. along which warp tows generally extend), and to a circumferential direction of the rotatable mandrel. The lateral direction may generally correspond to a weft direction of the woven preform, while acknowledging that weft tows may depart from a direction that is precisely orthogonal to the longitudinal and/or warp directions.

In the example shown in Figure 1, the woven preform is woven from carbon fibre tows. The carbon fibre tows may comprise any suitable number of carbon fibres. For example, the carbon fibre tows may be 1K, 3K, 6K or 12K carbon fibre tows. For example, the carbon fibre tows may be any suitable commercially available carbon fibre tows, such as those obtained from the HexTow^{®} line available from Hexcel Corporation, USA, the TORAYCA^{®} line available from Toray Composite Materials America, Inc., USA, or the Tenax^{™} line available from Teijin Carbon Europe GmbH, Germany. Alternatively, the carbon fibre may be replaced by other types of reinforcing fibre, such as glass fibre, aramid fibre or basalt fibre.

The reinforcing fibre tows are coated with a polymer-based coating known as sizing. The sizing can take any form known in the art and an appropriate sizing formulation may be selected based on the properties and/or composition of the reinforcing fibre tows. The sizing may comprise one or more thermoplastic polymers and/or one or more thermosetting polymers or precursors therefor. For example, the sizing may contain: one or more of: polyacrylic acids; acrylonitrile butadiene styrene; polyamides; polylactic acids; polycarbonates; polyether sulfones; polyoxymethylene; polyether ether ketones; polyetherimides; polyolefins (i.e. polyalkenes) such as polyethylene and/or polypropylene; polystyrene; polyvinyl chloride; polyvinylidene fluoride; and/or polytetrafluoroethylene; and/or one or more of: polyesters (e.g. polyester resins, for example, isophthalic polyester resins and/or unsaturated polyester resins); UV-curable monomers; vinyl esters (e.g. vinyl ester resins, for example, bisphenol A vinyl esters such as VR-60); acrylic resins (e.g. acrylic resins with epoxy and unsaturated groups, such as PD-3402); polyamides; epoxy resins (e.g. catalysed epoxy resins and/or non-catalysed epoxy resins, for example, bismaleimide triazine epoxy (BT-epoxy) resin); acrylonitriles; phthalonitrile resins; vinyl chlorides; and/or acrylonitrile-vinyl chloride copolymers. The sizing may also contain, for example, water, coupling agents (e.g. silanes), surfactants, plasticizers, anti-static agents, anti-foaming agents, rheology modifiers, and/or other additives or modifiers.

In use, the infrared heat source 130 is operated to heat the woven structure 200 as it exits the weave location 122 of the loom 120. On heating, the sizing coating the reinforcing fibre tows melts (for example, if the sizing contains one or more thermoplastic polymers) and/or begins curing (for example, if the sizing contains one or more thermosetting polymers or precursors therefor), which causes adjacent reinforcing fibre tows in the woven structure 200 to begin to adhere to one another at tow crossover locations. At the same time, tension applied to the woven structure 200 by rotating the mandrel 150 about its axis A pulls the warp tows taught. As the woven structure 200 moves away from the infrared heat source 130 and onto the mandrel 150, the woven structure 200 cools and the sizing resolidifies (for example, if the sizing contains one or more thermoplastic polymers) and/or finishes curing (for example, if the sizing contains one or more thermosetting polymers or precursors therefor), which the causes adjacent reinforcing fibre tows in the woven structure 200 to bond to one another at tow crossover locations, thereby fixing the woven structure 200 in place. Because the woven structure 200 is subjected to tension during the heating and cooling process, the reinforcing fibre tows are bonded to one another in a compact structure. The woven preform 200 formed on the mandrel 150 is therefore compacted and stabilised and contains significantly less trapped air than woven preforms prepared using alternative methods.

The loom 120 shown in the example of Figure 1 weaves a 3D woven structure 200. The 3D woven structure may have any suitable 3D structure and/or weave pattern. For example, the 3D woven structure may have a through-thickness interlock structure or a layer-to-layer structure, an angle interlock structure or an orthogonal interlock structure, and/or a plain, twill or satin weave pattern.

In other examples, however, the loom 120 may be configured to weave a 2D woven structure. The 2D woven structure may have any suitable 2D weave pattern. For example, the 2D woven structure may have a plain, twill or satin weave pattern.

The loom 120 may be any suitable type of a loom known in the art, such as a Dobby loom or a Jacquard loom. Suitable looms are available from, for example, Lindauer Dornier GmbH, Germany.

It will be appreciated that the mandrel 150 may be replaced by any suitable tensioner for applying longitudinal tension to the woven structure 200. For example, tension may be applied by pulling the woven structure 200 axially (i.e. in the longitudinal direction) or by winding the woven structure 200 onto a tool (e.g. such as the mandrel 150). For example, an edge of the woven structure 200 may be clamped onto a puller bar and the bar pulled away from the loom 120 by a cable. The type and arrangement of tensioner used will depend on whether a flat preform panel or a 3D shaped preform is to be produced.

The infrared heat source 130 is configured to heat the woven structure 200 to a temperature at which the sizing melts and/or cures (as appropriate). For example, the woven structure may be heated to a temperature from about 50 °C to about 250 °C, such as about 100 °C. It may not be necessary to hold the woven structure at the elevated temperature for a long period of time. For example, the woven reinforcing fibre fabric may be heated up to the desired maximum temperature and then immediately cooled back down towards room temperature. For example, the total heating time may be from about 1 second up to about 1 minute.

In the example shown in Figure 1, the infrared heat source 130 is an infrared heating lamp. However, it will be appreciated that the infrared heat source 130 can be replaced by any suitable heat source known in the art, such as any suitable type of heat lamp or resistive heating element. The heat source may be a directed heat source which can be directed towards the woven structure 200 at a particular location. The apparatus 100 may also include a temperature sensor (not shown) for measuring a temperature of the woven structure 200 or a temperature close to the woven structure 200. The loom controller 121 may take into account an output from the temperature sensor when controlling operation of the heat source 130.

As shown in Figure 1, the heat source 130 is located immediately downstream of the loom 120. However, the heat source 130 may be located anywhere between the weave location 122 and the mandrel 150.

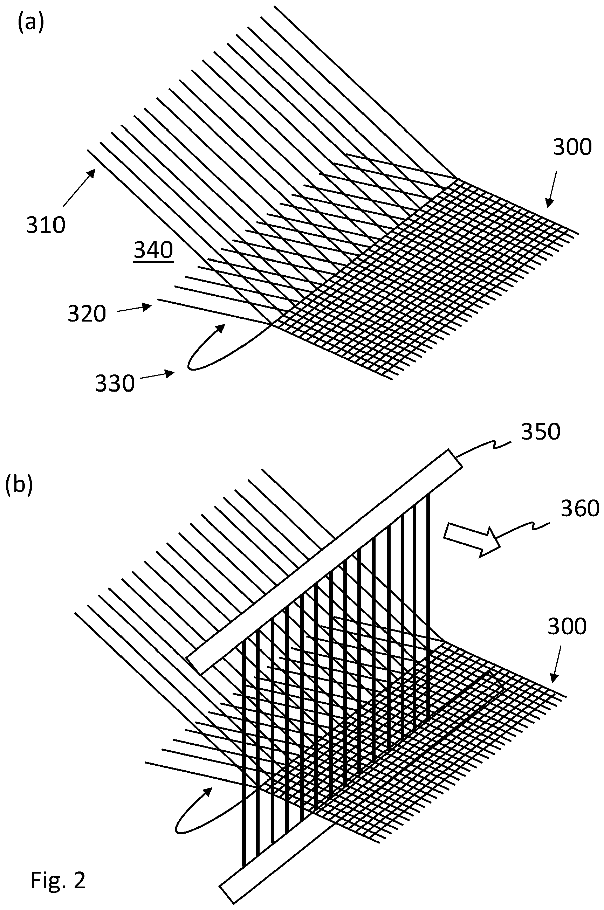

A simplified loom weaving process is illustrated in more detail in Figures 2 (a) and (b). As illustrated in Figure 2 (a), a 2D woven structure 300 is formed by weaving together warp tows 310, 320 and a weft tow 330. Warp tows 310 and 320 are separated from one another to form a space known as the shed 340. A weft tow 330 is passed from one edge of the fabric to the other edge using a shuttle, a projectile, a rapier, or the like. The inserted weft tow 330 is known as a pick. As illustrated in Figure 2 (b), a tool known as a batten or beater 350 is pushed in the direction indicated by arrow 360 to push a newly created pick into the woven structure 330, at a point known as the fell of the fabric. This operation is known as beat-up. The position of the warp tows 310 and 320 is then adjusted according to the weave pattern to be created and the process is repeated to form another pick.

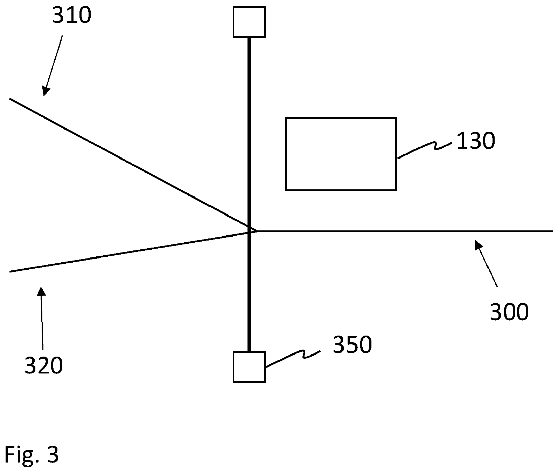

The heat source 130 may therefore be configured (i.e. positioned and arranged) to heat the woven structure 200, 300 after the beat-up operation has been carried out (i.e. after the fell point). This is illustrated in Figure 3 which shows in schematic side view the location of 130 heat source 130 immediately downstream of the fell point.

In the example illustrated in Figure 1 and described hereinabove, adjacent reinforcing fibre tows are bonded to one another by melting and/or curing sizing which coats the reinforcing fibre tows. However, bonding may be achieved by introducing polymeric material into the woven structure in different ways.

For example, a polymer-based binder powder may be applied to the reinforcing fibre tows prior to heating the woven structure 200. The binder powder may be applied to the reinforcing fibre tows prior to weaving, during the weaving process (for example, at the fell point) or after the woven structure has been formed (for example, as the woven structure exits the loom). The binder powder may take any form known in the art and may comprise one or more thermoplastic polymers and/or one or more thermosetting polymers or precursors therefor. For example, the binder powder may contain: one or more of: polyacrylic acids; acrylonitrile butadiene styrene; polyamides; polylactic acids; polycarbonates; polyether sulfones; polyoxymethylene; polyether ether ketones; polyetherimides; polyolefins (i.e. polyalkenes) such as polyethylene and/or polypropylene; polystyrene; polyvinyl chloride; polyvinylidene fluoride; and/or polytetrafluoroethylene; and/or one or more of: polyesters (e.g. polyester resins, for example, isophthalic polyester resins and/or unsaturated polyester resins); UV-curable monomers; vinyl esters (e.g. vinyl ester resins, for example, bisphenol A vinyl esters such as VR-60); acrylic resins (e.g. acrylic resins with epoxy and unsaturated groups, such as PD-3402); polyamides; epoxy resins (e.g. catalysed epoxy resins and/or non-catalysed epoxy resins, for example, bismaleimide triazine epoxy (BT-epoxy) resin); acrylonitriles; phthalonitrile resins; vinyl chlorides; and/or acrylonitrile-vinyl chloride copolymers. In some examples, the binder powder is an uncured resin powder.

Additionally or alternatively, polymeric material may be woven directly into the woven structure 200. For example, the loom may be configured to weave the reinforcing fibre tows together with one or more thermoplastic polymer yarns.

The thermoplastic polymer yarns may be made of any suitable thermoplastic polymers. For example, the thermoplastic polymer yarns may be made of one or more of: polyacrylic acids; acrylonitrile butadiene styrene; polyamides; polylactic acids; polycarbonates; polyether sulfones; polyoxymethylene; polyether ether ketones; polyetherimides; polyolefins (i.e. polyalkenes) such as polyethylene and/or polypropylene; polystyrene; polyvinyl chloride; polyvinylidene fluoride; and/or polytetrafluoroethylene. More particularly, the thermoplastic polymer yarns may be made of a polyamide such as nylon 6 or nylon 6,6 (i.e. PA 6 or PA 66) or a polyphthalamide such as PA 6T. For example, the thermoplastic polymer yarns may be made of a polyamide available in the Grilon^{®} line produced by EMS-GRIVORY, a division of EMS-CHEMIE AG, Switzerland. A suitable polyamide yarn from the Grilon^{®} line is KE-60.

The thermoplastic polymer yarns may have a linear density from about 100 dtex to about 350 dtex, for example. The woven reinforcing fibre fabric may include from about 1.0 wt. % to about 8.0 wt. %, for example, from about 1.0 wt. % to about 5.5 wt. %, of the thermoplastic polymer yarn.

The thermoplastic polymer yarns may be evenly distributed throughout the woven reinforcing fibre fabric. The thermoplastic polymer yarns may be woven into a 2D woven reinforcing fibre fabric in the warp and/or weft directions or into the 3D woven reinforcing fibre fabric in any of the warp, weft and/or binder directions. In some examples, the thermoplastic polymer yarns are woven into the 2D or 3D woven reinforcing fibre fabric in at least the weft direction.

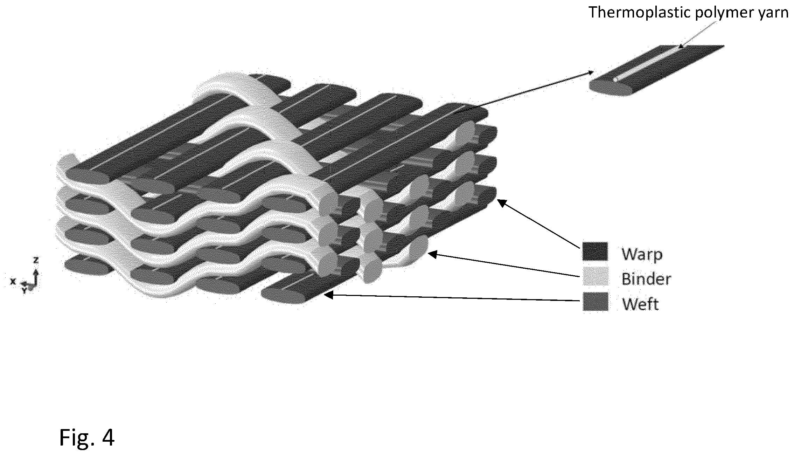

Figure 4 illustrates a unit cell of the 3D woven structure of an example 3D woven reinforcing fibre fabric incorporating one thermoplastic polymer yarn per weft reinforcing fibre tow. In the structure illustrated in Figure 4, each thermoplastic polymer yarn sits on the surface of a corresponding weft fibre tow. The full 3D woven structure of the fabric can be reproduced by repeating the unit cell shown in Figure 4 in the x and y directions.

Any of the different ways of introducing polymeric material into the woven structure (i.e. through use of a polymer-based sizing, a polymer-based binder powder and/or thermoplastic polymer yarns) may be combined with each other or used independently of each other.

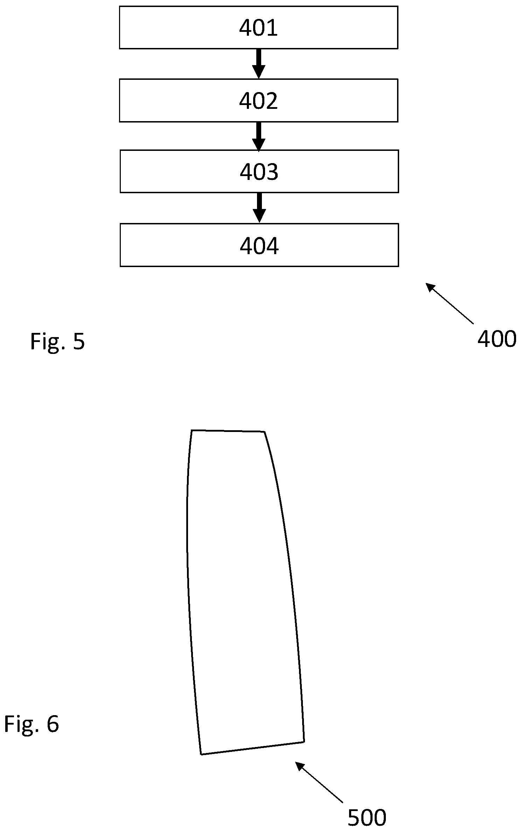

The preform 200 may be manufactured by the method 400 outlined in Figure 5. At 401, a fabric is woven from reinforcing fibre tows. At 402, polymeric material is incorporated into the fabric. At 403, the fabric is heated to cause the polymeric material to melt and/or begin curing while the fabric is held under tension. At 404, the fabric is cooled such that the polymeric material solidifies and/or finishes curing. It will be appreciated that steps 401 and 402 may take place sequentially or concurrently, dependent on how polymeric material is incorporated into the fabric. For example, incorporating polymeric material into the fabric may comprise weaving thermoplastic polymer yarns into the fabric, weaving the fabric from reinforcing fibre tows which are coated with a polymer-based sizing, or applying binder powder to the reinforcing fibre tows before or during weaving, in which cases steps 401 and 402 take place concurrently.

In subsequent steps, the preform 200 may be filled with any suitable polymeric matrix material. The polymeric matrix material is typically a thermosetting polymeric matrix material, such as an epoxy resin, a phenolic resin, an amino resin, a cyanate ester resin, a polyurethane, a polyimide, a polyamide, a bismaleimide, or a phthalonitrile resin. The polymeric matrix material may be injected into the preform under pressure within the resin transfer mould. Because the preform has already been compacted and stabilised, and because adjacent reinforcing fibre tows are bonded to one another by polymer, there is typically a low volume fraction of voids and/or air within the preform and injection of the polymeric matrix material is therefore easier and more complete than in conventional manufacturing methods. Any suitable type of resin transfer moulding (e.g. vacuum assisted resin transfer moulding) may be used dependent on the component to be manufactured and the materials used.

Figure 6 illustrates a composite component 500 manufactured using a method as described hereinabove. In the example shown in Figure 6, the component 500 is a panel for an aircraft. However, it will be appreciated that the manufacturing method outlined hereinabove could be used to manufacture any type of preform or composite component.

In some examples, the shape produced by heating and cooling the woven reinforcing fibre fabric (e.g. on a tool) is essentially the final shape of the composite component being manufactured. For example, the composite component may be manufactured from a single, shaped piece of 3D woven reinforcing fibre fabric.

In some examples, the composite component is assembled from a plurality of parts, one or more which parts are made by shaping woven reinforcing fibre fabric as disclosed herein.

In some examples, two or more preforms may be adhered to one another before injection of polymeric matrix material. In examples in which the preforms have been manufactured using thermoplastic polymeric material (e.g. thermoplastic polymer yarns), since thermoplastic polymeric material remelts on reheating and/or can remain tacky following initial heating, two or more preforms can be adhered to one another using the thermoplastic polymeric material.

It will be appreciated that the woven reinforcing fibre fabrics disclosed herein can be used to manufacture 2D shaped preforms for composite components, 2D shaped composite components or parts thereof, 3D shaped preforms for composite components and/or 3D shaped composite components or parts thereof.

It will be understood that the invention is not limited to the embodiments above-described and various modifications and improvements can be made without departing from the concepts described herein. Except where mutually exclusive, any of the features may be employed separately or in combination with any other features and the invention extends to and includes all combinations and sub-combinations of one or more features described herein.

## Claims

1. A manufacturing method comprising:
in a loom (120),
weaving a woven reinforcing fibre fabric (200, 300) comprising a plurality of reinforcing fibre tows (112) and polymeric material comprising a plurality of thermoplastic polymer yarns, wherein weaving comprises weaving the plurality of reinforcing fibres tows (112) and the plurality of thermoplastic polymer yarns together in the loom (120) to form the woven reinforcing fibre fabric (200, 300), wherein:
(a) each thermoplastic polymer yarn has a linear density no less than about 110 dtex and/or no greater than about 330 dtex; and/or
(b) the woven reinforcing fibre fabric (200, 300) comprises no less than about 1.0 wt. % and/or no greater than about 8.0 wt. % thermoplastic polymer yarn; and;
heating the woven reinforcing fibre fabric (200, 300) as it exits the loom (120) to cause the polymeric material to melt and/or cure.

2. The manufacturing method according to claim 1, wherein the method comprises:
heating the woven reinforcing fibre fabric (200, 300) under tension as the woven reinforcing fibre fabric (200, 300) exits the loom (120) to cause the polymeric material to melt and/or cure.

3. The manufacturing method according to claim 1, wherein each thermoplastic polymer yarn comprises a polyamide.

4. The manufacturing method according to any preceding claim, wherein the thermoplastic polymer yarns are evenly distributed throughout the woven reinforcing fibre fabric (200, 300) and/or one or more of the plurality of thermoplastic polymer yarns is:
(a) woven into the fabric (200, 300) parallel to a reinforcing fibre tow;
(b) woven into the fabric (200, 300) within a reinforcing fibre tow; or
(c) twisted into and/or around a reinforcing fibre tow.

5. The manufacturing method according to any preceding claim, wherein the method comprises:
weaving the plurality of reinforcing fibres tows (112) together in the loom (120);
applying polymer-based binder powder to the plurality of reinforcing fibre tows (112); and
heating the woven reinforcing fibre fabric (200, 300) as it exits the loom (120) to cause the polymer-based binder powder to melt and/or cure.

6. The manufacturing method according to any preceding claim, wherein at least some of the reinforcing fibre tows (112) have a polymer-based coating and the method comprises:
heating the woven reinforcing fibre fabric (200, 300) as it exits the loom to cause the polymer-based coating to melt and/or cure.

7. The manufacturing method according to any preceding claim, wherein the method comprises:
heating the woven reinforcing fibre fabric (200, 300) after carrying out a beat-up operation.

8. The manufacturing method according to any preceding claim, wherein the method comprises:
heating the woven reinforcing fibre fabric (200, 300) to a temperature from about 50 °C to about 250 °C, and optionally,
after heating the woven reinforcing fibre fabric (200, 300), cooling the woven reinforcing fibre fabric (200, 300) under tension to no greater than about 50 °C.

9. The manufacturing method according to any preceding claim, wherein the woven reinforcing fibre fabric (200, 300) forms a preform for a composite component (500) and the method further comprises:
introducing matrix material into the preform to form the composite component (500) or part thereof.

10. A weaving apparatus (100) comprising:
a loom (120) for weaving a woven reinforcing fibre fabric (200, 300);
a heat source (130) configured to heat the woven reinforcing fibre fabric (200, 300) as it exits the loom; and
a tensioner (150) for applying tension to the woven reinforcing fibre fabric (200, 300) as it exits the loom (120), wherein the tensioner (150) comprises a rotatable mandrel (150) configured to receive and draw the woven reinforcing fibre fabric (200, 300) away from the loom (120).

11. The weaving apparatus (100) according to claim 10, wherein the heat source (130) is configured to heat the woven reinforcing fibre fabric (200, 300) downstream of a beat-up point.

12. The weaving apparatus (100) according to claim 10 or 11, wherein the heat source (130) is a directed heat source (130).

13. The weaving apparatus (100) according to any one of claims 10 to 12, wherein the heat source (130) is configured to heat the woven reinforcing fibre fabric (200, 300) to a temperature from about 50 °C to about 250 °C.

14. A preform (200, 300) manufactured by the manufacturing method according to claim 9.

15. A composite component (500) manufactured by the manufacturing method according to any one of claims 1 to 9.
